# EUROPEAN PATENT APPLICATION

(11) **EP 2 645 733 A1**
(43) Date of publication of application: **02.10.2013**
(21) Application number: 12002266.0
(22) Date of filing: 29.03.2012
(51) Int. Cl.: H04N 21/658, H04N 21/8352, H04N 21/478, H04N 21/4725, G06Q 30/00

(54) **Method and device for identifying objects in movies or pictures**

(71) Applicant: NorCom Information Technology AG, 80333 München (DE)
(72) Inventor: Haynk, Anatoly, 80802 München (DE)
(74) Representative: Taruttis, Tilman

(57) **Abstract**

A method and device for performing the method steps is described for identifying objects in a movie. When an observer watches a movie, he may mark a displayed object that he is interested in. The marked object is then identified using various criteria, and stored information according to the marked object is then presented to the observer on the screen of the observer's displaying device.

## Description

The invention relates to a method and corresponding device for identifying objects in movies.

When watching a movie or a picture on a computer the observer sometimes may see an object, in which he is interested. Typically the observer can also basically identify the object, i.e. the observer can identify the type or kind of the object. For example the observer can identify, whether the object is a car or a shirt or anything else. However, in most cases the observer cannot exactly identify all details of the object he is interested in. Detailed technical data or the manufacturer or any other data of the object that an observer may be interested in typically cannot be retrieved from the information provided in the movie. For example when an observer watches a movie on a screen of a computer or a cell phone or on a modern TV or any other comparable device, he may be interested in any object displayed in the movie, and for which he would like to have more detail information than just the displayed view of the object. Hence there is a need for a method and a corresponding device for providing information related to an object displayed in movie on the screen.

In today's world movies or television can be watched on a computer device or a so-called smart phone or any comparable handheld or locally fixed device that can receive via cable or radio link a media data stream representing a movie. These devices typically comprise a pointing device, i.e. a so-called computer mouse, or a touch sensitive screen that enables the observer to click, i.e. to mark, a desired region on the display where the object of interest is displayed to the user. Accordingly the device basically provides means for marking a displayed object on the display. However, just by clicking on a displayed object does not provide information related to the object of interest.

### Brief Description of the Figures

The invention will now be described with reference to the accompanying figures, wherein
- Fig. 1: depicts a system according to the invention;
- Fig. 2: depicts a flowchart illustrating method steps according to the invention

### Detailed Description

Embodiments of the present invention relate to a method and a corresponding system for providing detail information related to objects presented on a display device in a movie scene or picture, wherein an observer has marked a displayed object of interest.

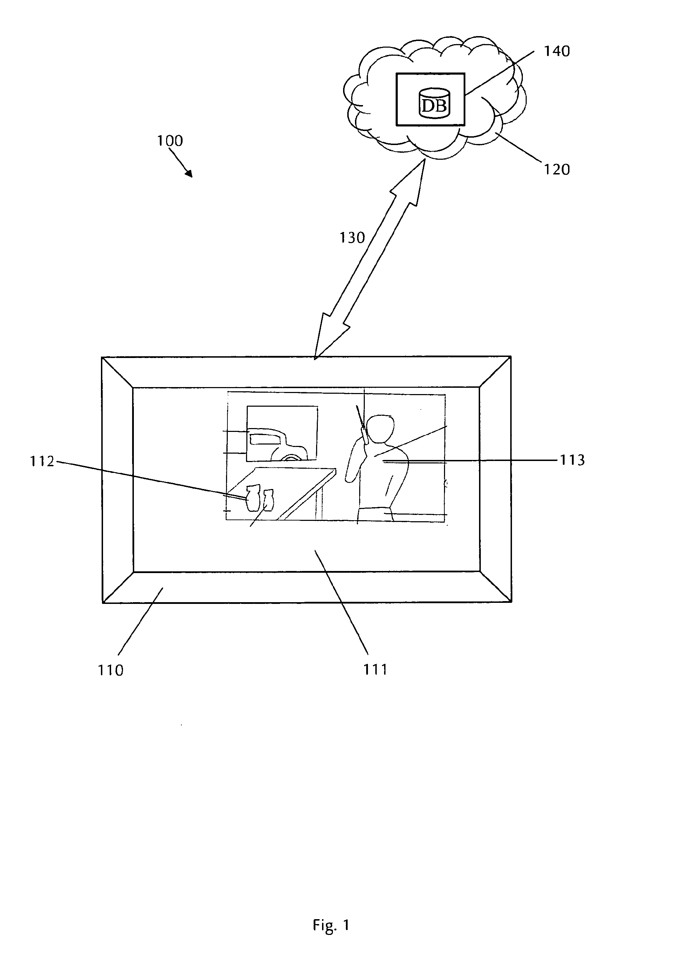

Figure 1 illustrates a system 100 that implements the method. Basically the method is performed when an observer watches a picture or a movie on a display device 110. Said display device may be one of a locally fixed computer, i.e. a conventional PC capable of reproducing the movie, wherein the computer is connected wired or wireless to the internet 120 by a link 130. The computer may retrieve the movie from any arbitrary source, i.e. via the internet from an online source or via a received TV radio signal or the computer may access a locally media source, i.e. a DVD-ROM or CD or a hard drive. The computer furthermore is capable of establishing a connection to a host computer 140 that is accessible via a WAN connection or an internet connection in order to transmit request messages to and retrieve response messages from said host computer. Said computer also comprises a pointing device that enables the observer to mark a particular point on the display, for example by clicking or double clicking on the display.

Alternatively the display device can be a TV set that is linked by any kind of link 130 to the network 120 that comprises the host computer 140. Modern TV sets are often connect by a fast digital line directly to the internet, said TV set also allows to browse the internet and furthermore provides a pointing device for marking a particular point on the display. Accordingly the modern TV set is adapted to act like a computer as described above.

In still another alternative the display device 110 can be a portable or handheld computer device such as a laptop computer or a so-called personal digital assistant, i.e. a PDA, or a so-called smart phone or tablet computer, which typically comprise a display suitable for displaying a picture or a movie, and that typically is enabled to mark a particular point on the display. This can be achieved for example by a touch sensitive display that a user may touch and thus serves as an input device. In this context a touch sensitive display may be regarded as a pointing device, since by tapping on the display with a finger or pen a mouse and its functionality is replaced. These handheld devices also are connected by a link 130 to the internet 120 thus capable of connecting to the host computer 140.

While a picture or a movie is displayed on the screen, the observer may be interested in detail information regarding a particular item shown in the picture or movie. In order to reference or mark the item of interest, the observer may mark the item, i.e. the observer may use the pointing device to mark the object, for example the observer may click or double-click on the display using the pointing device. Note that in the context of this description and in order to not unnecessarily obscure the description any action marking a region on the display by using a pointing device or by tapping a touch sensitive screen is denoted as clicking on the display area 111. Said clicking on the area where the picture or movie is displayed is recognized by the operating system of the display device, which forwards that click event to the application performing the display of the picture or movie for further processing. That is the application executed by the operating system of the display device is notified by the operating system that the observer has clicked on the area that the application uses for displaying the movie or picture, wherein said notification comprises the exact coordinates of the click, i.e. the accurate coordinates of the click. The application then uses the provided information about the click and meta information about the displayed picture or movie and communicates with the host computer 140 for retrieving detail information about an item that was clicked on.

In one embodiment a program or application may display a picture or a movie on at least a portion of the display 111 of device 110. The displayed picture or movie may comprise a first 112 or second object 113, which in this context serve as placeholders for any item or object. While watching the movie or picture the observer may become interested in one of these objects 112 or 113. By clicking on the object the observer may mark that object. In one embodiment the user may double click on the object, since a single click event often is recognized as a command to pause the display of a movie. Alternatively the user may perform any other interaction with the display device, for example pressing a key on a keyboard, which the device will recognize and forward as a user interaction event to the application.

The operating system will forward the click event to the application. When the application receives the notification about the detected user interaction, e.g. the click, the application may generate metadata about the picture or movie currently displayed at the time of the click event. Note that metadata in this context is data, i.e. information, about data content, i.e. about the picture or movie displayed on the display portion that the observer has clicked on. Subsequently the application may send a request message comprising said metadata via link 130 to host computer 140 thus triggering the host computer to identify the object that was clicked on, or all objects shown in the movie scene or picture, and to provide further detail information relating to said object. Host computer 140 will transmit a response message to the display device 110, particularly the application running on the display device that may comprise the requested detailed information.

Host computer 140 accordingly is adapted to receive request messages comprising metadata from applications and furthermore to process the request messages. Host computer 140 accordingly evaluates the metadata provided in the request message, identifies the movie scene or picture based on the provided metadata, and identifies or retrieves requested detail information related to objects shown in the identified movie scene or picture. Said detail information is then transmitted in a response message via link 130 to the display device, where the application in turn will present the provided detail information to the observer.

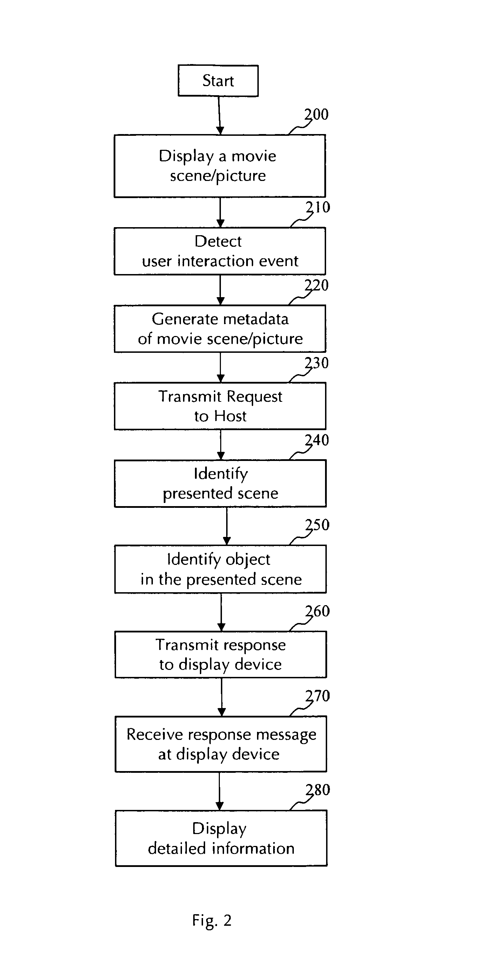

Fig. 2 depicts a flowchart illustrating the sequence of the method steps.

In a first method step 200 a movie or picture is presented to an observer on at least a portion of the display of a display device by an application. Said application for presenting the picture/movie to the observer may comprise all functionality of a conventional application for displaying a picture or movie and furthermore may be adapted to comprise the functionality as described herein and related to the method steps performed on the display device. Note that in an alternative embodiment of the invention a conventional application or program for displaying the picture or movie may be used in cooperation with an application or a so-called plug-in that provides the functionality of the subsequent method steps. In this regard the invention shall not be limited. The display device may retrieve the data of the picture/movie from any arbitrary source, i.e. the data can be retrieved from a local data source such as a DVD or hard drive. Alternatively the displayed data, which may also comprise audio data, can be retrieved via a television receiver in case the displayed data is a TV channel. In still another alternative the displayed data can be retrieved via link 130, i.e. an online network connection that enables retrieval of data from any arbitrary source that is accessible via said online link 130. In one exemplary embodiment the displayed data may be retrieved for example from an online TV channel source.

In step 210 a user interaction event initiated by the observer is detected, i.e. the operating system or the application itself detects an event indicating that the observer has clicked on the display or otherwise marked a movie scene or picture. Typically the operating system of the display device detects events indicating any user interaction with the device. The operating system typically forwards these events to the application that occupies that portion of the display 111 comprising the location where the user or observer has clicked or placed the user interaction event. The information comprised in the notification to the application may comprise the exact location of the click on the display. Accordingly the application may determine the location within the displayed picture/movie that was clicked. For example when the operating system provides the location information of the click event in terms of pixels to the application, and the application is aware of the portion of the display where the picture/movie is presented, then the application may calculate the location of the click event related to the picture/movie from the provided pixel coordinates referenced to the display screen.

Note that alternatively or in addition to an event generated by a pointing device, i.e. a mouse device or a touch event on a touch sensitive display, a particular keystroke or other user interaction can be configured to be recognized as a user interaction event indicating that the user is interested in at least one object presented to the observer in the movie scene presented to the observer at the time when that keystroke occurred. These events typically are forwarded to the application whose display window is the topmost of the displayed windows on the display. The application accordingly may be configured and adapted to recognize any arbitrary interaction from the observer as an event to start performing the method describes as described in the following.

Upon receiving a notification indicating such a user interaction event, the application checks in step 220 whether the click event falls within the display area where the picture/movie has been displayed at the time of the click, i.e. at the time of occurrence of the user interaction event. In case the click does not fall within that region, i.e. for example when the observer has clicked on a button of the application or on the application frame surrounding the area where the picture/movie is presented, then the application may process that event according to the marked button or may disregard that event. In case the click does fall within the area used by the application to present display the picture/movie to the observer, then the application may start generating metadata. Note that in case of any event representing a user interaction event, i.e. a keystroke that may not be related to an exact display location, the application may read that user interaction event as relevant for the entire display.

The metadata itself and the generation of the metadata depend on the media presented to the user. In case the media presented to the observer is a movie, then the metadata may comprise at least one keyword related to the movie. Said keyword may be the title of the movie or may be a string of characters derived from the title to identify the movie. The metadata may furthermore comprise any other descriptive or characterizing information available in connection with the presented movie or picture, such as the producer or the year of production or the genre of the movie. In addition or alternatively the metadata may comprise information specifying a TV channel on which the move or picture was broadcasted or an address from which the media data stream or picture is received.

The metadata may furthermore comprise the point in time when the user interaction event occurred related to the beginning of the movie in order to identify in which scene of the movie the observer has clicked. This can be achieved in the application for example by a duration counter that counts the time the movie has been presented, so that the metadata may comprise a timestamp related to the beginning of the movie.

Furthermore the metadata may comprise a fingerprint of the visual data presented to the observer at the time of the user interaction event. In one embodiment this can be achieved by calculating a unique fingerprint based on the visual data representing the picture or frame presented to the user when the click occurred. At the time the click event, i.e. the user interaction event, is forwarded to the application, a snapshot of the displayed movie or the scene, i.e. a plurality of displayed frames, is stored. Then a Fourier transformation can be applied to the stored snapshot or scene to produce information characterizing the displayed picture of the movie when the observer clicked. In one embodiment, particularly when the presented movie is in mpeg format, the fingerprint can be calculated based on the main- and subframes of the scene displayed at the time of the click. In case the displayed movie is retrieved by the display device as a media stream in a known format, then a portion of that streamed data, for example main- and subframes of the visual media data, may be used as a basis for calculating a fingerprint of the displayed scene. In that case a hash function may be used for calculating the fingerprint of the movie scene. In still an alternative embodiment the main- and subframes of the movie scene, for example when the presented movie exhibits a suitable format, may be used directly, i.e. without applying a processing step of producing a fingerprint based on the main- and subframes.

In case the movie or picture is presented along with sound, i.e. the presented media comprises audio data, then the audio data may be used similarly for producing metadata characterizing the picture or movie scene presented to the observer when the click occurred. In one embodiment a Fourier transformation may be applied to the audio data of the movie scene, thus producing an audio fingerprint comprising the frequencies and amplitudes of the audio data.

In this way metadata is produced that characterizes the movie scene displayed at the point in time when the observer clicked on the display of the device. Note that generally all metadata suitable for characterizing a movie scene or a picture of a movie can be used here.

The application then transmits in step 230 from the display device via link 130 a request message to host computer 140, wherein the request message at least comprises metadata enabling the host computer to identify the marked object as presented in the movie scene, i.e. the object the observer has marked by clicking on that. Accordingly said request message comprises metadata characterizing the contents, i.e. the movie scene or picture, presented to the observer and optionally the geographical position of the click event relative to the area used for presenting the movie or picture.

Display device 110 may transmit the request message using any wired or wireless link 130 via which the message can be forwarded to network 120 to be finally delivered to host 140. In one embodiment, particularly when using a locally fixed PC or a TV, link 130 can be a wired internet online connection. Alternatively, and particularly when display device 110 is a handheld device such as a smartphone or tablet computer or PDA, link 130 can be a wireless LAN connection or a radio link via a cellular communication system.

Said request message is then processed by host computer 140. Based at least on the data or metadata provided in the request message the host computer then identifies in step 240 the marked movie scene as presented to the observer. At the host computer this can be achieved by comparing the data and metadata to reference data stored in the host computer. In one embodiment host computer 140 may host a data base storing keywords or metadata that can be compared to corresponding data received in a request message. The process of identifying a movie scene or picture may comprise an iterative process, wherein in a first step the keyword of a movie is used for identifying the movie and then the metadata is used to identify the scene of the movie that was marked by the observer, wherein said metadata may be a timestamp indication the playing time of the movie or the indication of particular main- and subframes of the movie.

When the movie scene or picture displayed to the observer has been identified, host computer 140 identifies the object that the observer has marked by clicking on that. This can be achieved by identifying the region where the user has placed the click and by using a database comprising a mapping of objects presented in the movie scene and their location within the scene. That is by evaluating the exact point in time in the movie and the clicked region the host computer may identify the object that was presented in that movie scene at the clicked region. In this way host computer 140 can be adapted and configured to identify an object displayed in an identified movie scene or picture by comparison of the geographical information of the user interaction event provided in the request message with reference data. In one embodiment host computer 140 may comprise a database for storing the objects and the corresponding information in which movie scene or picture and where within that scene or picture was presented to the observer.

When the object of interest has been identified, host computer 140 may assemble in step 250 a response message comprising detail information related to that object. Said detail information may comprise technical or scientific data and/or commercial data related to that object. In one embodiment the detail information may comprise a detailed picture depicting the object of interest. In still another embodiment the detail data may comprise a link, i.e. for example an HTML-link referencing another internet page, that provides further detail information related to the object of interest. In one exemplifying embodiment that link may be a link to an online encyclopaedia or the link may reference a website of a shop offering the object to buy.

Note that in a further embodiment the host computer may identify not only the marked object in the movie scene or picture but all objects presented to the observer. The detail information may accordingly comprise information for each of the objects presented in the scene. In still another embodiment the host may assemble data of for example an interactive page, for example in HTML format, which shows each object visible in the marked movie scene or picture and provides detailed information for each of these objects.

When the host computer 140 has assembled the detail information according to the information provided in the request message, a corresponding response message is transmitted in step 260 from host computer 140 to display device 110 via link 130. Host computer 140 may use the link 130 that has been established by display device 110 when sending the request message to the host computer. In this way, since the request message also provides the address of the display device for receiving a response, the host computer may transmit the response message to display device 1 10.

When display device 110 in step 270 receives the response message comprising the requested detail information as assembled by host computer 140, display device 110 will process the detail information, i.e. the display device presents the assembled detail information to the observer in step 280.

In one embodiment said detail information may be displayed on the display device in the application window in which the movie is presented, i.e. the detail information can be presented to the observer as an overlay or pop-up window. Alternatively the application may display the detail information in an additional window, which can be placed arbitrarily on the display of the display device. In one embodiment that additional application window that additional application window may be minimized, for example in response to an interaction of the observer. The observer for example may minimize the additional window or send that window into the background of the hierarchy of windows on the display device so he can watch the movie. In this way the observer may have a look at said additional window or a plurality of additional windows presenting the requested detail information at an arbitrary time, for example after having watched the movie or picture.

In one embodiment the step of displaying the detailed information to the user of the display device comprises displaying the detail information in a web browser thus allowing the user or observer to interact with displayed data. That is in one embodiment the observer may click on link that refers to at website providing even more detail information, thus opening the website in the web browser. The observer may then retrieve the detail information from that web site. Alternatively the website may provide information related to buying the object of interest.

Note that the present invention may be realized in hardware, software, or a combination of hard- and software. The invention may be realized in a centralized fashion in at least one digital signal processing system or in a distributed fashion where different elements are spread across several interconnected computer systems. Any kind of computer system or other apparatus adapted for carrying out the method described herein is suited. A typical combination of hard- and software may be a general purpose computer system with a computer program that, when being loaded and executed, controls the computer system such that it carries out the method described herein.

The invention may also be embedded in a computer program product, which comprises all features enabling the implementation of the methods described herein, and which when loaded in a computer system is able to carry out these methods. Computer program in the present context shall mean any expression, in any language, code or notation, of a set of instructions intended to cause a system having an information processing capability to perform a particular function either directly or after either or both of conversion to another language, code or notation or reproduction in a different material form.

## Claims

1. A method for providing detail information of an object presented in a movie or picture, comprising:
- displaying the movie or picture on a display device; and
- generating metadata related to a scene of the movie or the picture; and
- transmitting from the display device to a host computer a request message comprising the generated metadata; and
- receiving said request message at the host computer and identifying the movie scene or picture based on the metadata; and
- at the host computer identifying detail information related to at least one object depicted in the identified movie scene or picture based on the metadata; and
- transmitting in a response message the identified detail information to the display device; and
- displaying the detail information on the display device (110).

2. The method of claim 1 wherein the metadata comprises data describes the scene of the movie or picture.

3. The method of any preceding claim wherein the metadata comprises at least one of the title of the displayed movie or picture, a time stamp indicating the passed playing time of the movie or Fourier transformation values of picture/movie or audio data.

4. The method of any preceding claim further comprising the step of detecting a user interaction event in the display device indicating an interaction of a user with the display device before generating the metadata.

5. The method of any preceding claim wherein the step of identifying detail information comprises the step of comparing the metadata to reference data to identify the movie scene or picture.

6. The method of claim 5 wherein the step of identifying detail information comprises identifying objects shown in the identified movie scene or picture.

7. The method of claim 6 wherein the step of identifying detail information further comprises accessing a database storing detail information related to the identified objects.

8. The method of any preceding claim wherein the detail information comprises information about at least one of a vendor of an identified object or a link relating to a website providing information related to the identified object.

9. A device adapted and configured for presenting a movie or a picture to a user, said device comprising:
- a display for presenting the movie or picture to the user; and
- means for generating metadata related to a scene of the movie or picture; and
- means for transmitting a request message comprising said metadata to a host computer; and
- means for receiving a response message from the host computer, said response message comprising detail information of objects presented in the movie scene or picture; and
- a display for presenting the detail information to the user.

10. A computer device connected to a network, said computer device being adapted and configured for
- receiving from requesting device via said network a request message comprising metadata related to a scene of a movie or a picture;
- identifying the scene of a movie or picture based on the metadata;
- identifying objects shown in the identified movie scene or picture;
- transmitting to the requesting device a response message comprising detail information related to the identified objects.
